# EUROPÄISCHE PATENTSCHRIFT

(11) **EP 3 408 518 B1**
(45) Veröffentlichungstag und Bekanntmachung des Hinweises auf die Patenterteilung: **24.11.2021**
(21) Anmeldenummer: 17701030.3
(22) Anmeldetag: 20.01.2017
(51) Int. Cl.: F02D 19/06, F02D 19/10, F02M 21/02

(54) **ZWEISTOFF-BRENNSTOFFINJEKTOR, BRENNKRAFTMASCHINE MIT EINEM SOLCHEN ZWEISTOFF-BRENNSTOFFINJEKTOR, UND VERFAHREN ZUM BETREIBEN EINER SOLCHEN BRENNKRAFTMASCHINE**
DUAL-FUEL INJECTOR, INTERNAL COMBUSTION ENGINE HAVING SUCH A DUAL-FUEL INJECTOR, AND METHOD FOR OPERATING SUCH AN INTERNAL COMBUSTION ENGINE
INJECTEUR DE CARBURANT POUR DEUX CARBURANTS, MOTEUR À COMBUSTION INTERNE MUNI DUDIT INJECTEUR DE CARBURANT POUR DEUX CARBURANTS, ET PROCÉDÉ PERMETTANT DE FAIRE FONCTIONNER LEDIT MOTEUR À COMBUSTION INTERNE

(30) Priorität: 29.01.2016 DE 102016201428
(43) Veröffentlichungstag der Anmeldung: 05.12.2018
(73) Patentinhaber: Rolls-Royce Solutions GmbH, 88045 Friedrichshafen (DE)
(72) Erfinder: BOOG, Manuel, 88326 Aulendorf (DE); FIMML, Wolfgang, 6912 Hörbranz (AT)
(74) Vertreter: Kordel, Mattias
(86) Internationale Anmeldenummer: PCT/EP2017/000072
(87) Internationale Veröffentlichungsnummer: WO 2017/129355

(56) Entgegenhaltungen:
- EP-A1- 0 778 410
- DE-A1-102014 010 716
- DE-A1-102014 010 717

## Beschreibung

Die Erfindung betrifft einen Zweistoff-Brennstoffinjektor für eine Brennkraftmaschine, eine Brennkraftmaschine mit einem solchen Zweistoff-Brennstoffinjektor und ein Verfahren zum Betreiben einer solchen Brennkraftmaschine.

Gasförmige Brennstoffe gewinnen im Großmotorensektor, insbesondere bei Stationärmotoren zur Stromerzeugung, zunehmend an Bedeutung. Dabei eignet sich insbesondere Erdgas wegen seiner sehr guten Verfügbarkeit sowie seines günstigeren Emissionspotentials insbesondere gegenüber Dieselkraftstoff hervorragend für einen wirtschaftlichen und umweltschonenden Motorbetrieb. Bei Gasmotoren, welche nach dem Dieselverfahren (Kompressionszündung) arbeiten, wird normalerweise eine kleine Menge Diesel als Starthilfe für die nachfolgende Gasdiffusionsverbrennung benötigt. Dabei sollten die Einspritzstrahlprofile der beiden Kraftstoffsysteme (Diesel und Gas) symmetrisch ausgerichtet sein, um eine maximale und eindeutig zuordenbare Überdeckung der beiden Einspritzbilder bewirken zu können. Hierfür sind Zweistoff-Brennstoffinjektoren bekannt, welche eine erste Injektionseinrichtung zur Injektion eines ersten Brennstoffs aufweisen, wobei wenigstens eine zweite, radial auswärts der ersten Injektionseinrichtung angeordnete Injektionseinrichtung zur Injektion eines zweiten Brennstoffs vorgesehen ist, wobei der zweite Brennstoff und der erste Brennstoff verschieden sind. Insbesondere ist es üblich, dass als zweiter Brennstoff ein Brenngas verwendet wird, wobei als erster Brennstoff ein Zündöl, vorzugsweise Diesel, verwendet wird. Es ist ein erster Anschluss zur Zuführung des ersten Brennstoffs vorgesehen, und es ist ein zweiter Anschluss zur Zuführung des zweiten Brennstoffs vorgesehen. Ein Zweistoff-Brennstoffinjektor, bei welchem eine Mehrzahl von Gasdosierventilen als zweite Injektionseinrichtungen koaxial zu einer mittig angebrachten Dieseleinspritzdüse als erster Injektionseinrichtung angeordnet sind, geht beispielsweise aus der deutschen Patentschrift DE 10 2013 022 260 B3 hervor.

Solche Zweistoff-Brennstoffinjektoren weisen Löcher und Volumina, insbesondere Sacklöcher und Spritzlöcher, auf, aus denen nach Ende eines Eindüsvorgangs, nachdem eine Düsennadel geschlossen ist, Brennstoff mit niedrigem Druck in den Brennraum expandieren kann, der dort nicht mehr oder nur teilweise verbrannt wird. Dies ist insbesondere problematisch bei gasförmigen Brennstoffen, die sich bei der Expansion sehr stark ausdehnen, und insbesondere bei Erdgas, wo dieser Effekt zu einem hohen Methanschlupf führt.

Aus der deutschen Offenlegungsschrift DE 10 2014 010 716 A1 geht ein Dual-Fuel-Kraftstoffinjektor für eine Brennkraftmaschine hervor, der eine Lösung aufzeigt, wie eine gasbehaftete Flüssigleckage aus dem Kraftstoffinjektor abgeführt werden kann.

Aus der deutschen Offenlegungsschrift DE 10 2014 010 717 A1 geht ein Dual-Fuel-Kraftstoffinjektor für eine Brennkraftmaschine hervor, der über seinen Umfang Gasdüsenöffnungen aufweist, die eine einfache Brenngasausbringung in radialer Richtung begünstigen.

Aus der europäischen Offenlegungsschrift EP 0 778 410 A1 geht ein Dual-Fuel-Kraftstoffinjektor für eine Brennkraftmaschine hervor, der die Kraftstoffe zeitlich exakt und gleichmäßig einbringt. Zusätzlich ist der Kraftstoffinjektor konstruktiv für enge Bauräume ausgelegt.

Aus der US 4 463 568 A geht ein Zweistoff-Injektor für eine Gasturbine hervor, der einen zentralen Kanal und einen ersten radialen Auslass, sowie eine den zentralen Kanal ringförmig umgreifende und einen Ringkanal bildende Hülse mit einem zweiten radialen Auslass aufweist. Der zentrale Kanal und der Ringkanal sind mit einer Kompressionsluftversorgung verbunden, wobei dem zentralen Kanal außerdem ein gasförmiger Brennstoff und dem Ringkanal ein flüssiger Brennstoff zugeführt wird.

Aus der deutschen Offenlegungsschrift DE 10 2013 017 853 A1 geht ein Dual-Fuel-Kraftstoffeinspritzsystem mit einer Brenngasversorgungseinrichtung und einer Flüssigkraftstoffversorgungseinrichtung hervor, das eine Brenngas-Injektoreinheit mit einem Flüssigkraftstoff-Steuerteil und einem Gasdüsenteil aufweist.

Der Erfindung liegt die Aufgabe zugrunde, einen Zweistoff-Brennstoffinjektor, eine Brennkraftmaschine und ein Verfahren zum Betreiben einer Brennkraftmaschine zu schaffen, wobei die genannten Nachteile nicht auftreten. Insbesondere soll ein Schlupf unverbrannter Kohlenwasserstoffe, insbesondere ein Methanschlupf, im Vergleich zu herkömmlichen Zweistoff-Brennstoffinjektoren reduziert werden.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Zweistoff-Brennstoffinjektor geschaffen wird, der eine erste Injektionseinrichtung zur Injektion eines ersten Brennstoffs und wenigstens eine zweite, radial auswärts der ersten Injektionseinrichtung angeordnete Injektionseinrichtung zur Injektion eines zweiten Brennstoffs aufweist, wobei der zweite Brennstoff von dem ersten Brennstoff verschieden ist, und wobei ein erster Anschluss zur Zuführung des ersten Brennstoffs vorgesehen ist, und wobei ein zweiter Anschluss zur Zuführung des zweiten Brennstoffs vorgesehen ist. Dabei ist vorgesehen, dass der erste Anschluss mit der ersten Injektionseinrichtung zur Zufuhr des gasförmigen, ersten Brennstoffs, und der zweite Anschluss mit der zweiten Injektionseinrichtung zur Zufuhr des flüssigen, zweiten Brennstoffs fluidverbunden ist. Dadurch werden im Vergleich zu einem bekannten Zweistoff-Brennstoffinjektor die Injektionseinrichtungen in ihrer Funktion bezüglich der Brennstoffe vertauscht. Insbesondere wird der gasförmige Brennstoff nun nicht mehr radial auswärts durch die wenigstens eine zweite Injektionseinrichtung eingebracht, sondern vielmehr durch die im Vergleich zu der wenigstens einen zweiten Injektionseinrichtung radial innen angeordnete, erste Injektionseinrichtung. Da radial auswärts der ersten Injektionseinrichtung typischerweise eine Mehrzahl von zweiten Injektionseinrichtungen vorgesehen sind, welche eine Mehrzahl von Sacklöchern aufweisen, oder eine ringförmige zweite Injektionseinrichtung mit ringförmigem Sackloch vorgesehen ist, ergibt sich hier insbesondere ein Totvolumen, aus dem Brennstoff expandieren kann, welches größer ist als ein Totvolumen eines Sacklochs der ersten Injektionseinrichtung. Wird demnach der erste, gasförmige Brennstoff über die erste Injektionseinrichtung eingebracht, besteht das Problem des expandierenden, gasförmigen Brennstoffs und des Schlupfs unverbrannter Kohlenwasserstoffe nur in Hinblick auf das vergleichbar kleine Volumen des Sacklochs der ersten Injektionseinrichtung, während bei dem größeren Volumen der Sacklöcher oder des einen Sacklochs der zweiten Injektionseinrichtungen kein solches Problem mehr besteht, da durch diese/dieses flüssiger Brennstoff eingebracht wird.

Der Zweistoff-Brennstoffinjektor weist vorzugsweise eine längliche Erstreckung und somit eine Längsachse auf, die eine Axialrichtung definiert. Eine radiale Richtung steht dabei senkrecht auf der Längsachse. Eine Umfangsrichtung umgreift die Längsachse konzentrisch.

Mit "radial auswärts" ist insbesondere gemeint, dass die wenigstens eine zweite Injektionseinrichtung - mit Blick auf die Längsachse des Zweistoff-Brennstoffinjektors - in einem größeren radialen Abstand zu dieser angeordnet ist, als die erste Injektionseinrichtung.

Als erster, gasförmiger Brennstoff wird vorzugsweise ein Stoff verwendet, der unter Normalbedingungen, insbesondere bei 25 °C und 1013 mbar, gasförmig und brennbar, insbesondere in einem Brennraum einer Brennkraftmaschine verbrennbar ist. Bevorzugt wird als gasförmiger, erster Brennstoff ein methanhaltiger Brennstoff verwendet, insbesondere Erdgas, Flüssigerdgas (Liquefied Natural Gas) oder komprimiertes Erdgas (Compressed Natural Gas).

Als flüssiger, zweiter Brennstoff wird insbesondere ein Stoff verwendet, der unter Normalbedingungen, insbesondere bei 25 °C und 1013 mbar, flüssig ist, wobei der Stoff brennbar, insbesondere in einem Brennraum einer Brennkraftmaschine verbrennbar ist. Vorzugsweise weist der flüssige, zweite Brennstoff eine höhere Zündwilligkeit auf als der erste, gasförmige Brennstoff. Insbesondere ist der zweite, flüssige Brennstoff vorzugsweise ein Zündöl, insbesondere Diesel oder Dimethylether.

Gemäß einer Weiterbildung der Erfindung ist vorgesehen, dass die erste Injektionseinrichtung zentral an dem Zweistoff-Brennstoffinjektor angeordnet ist. Bevorzug ist die erste Injektionseinrichtung mittig auf der Längsachse des Zweistoff-Brennstoffinjektors angeordnet oder fällt mit dieser zusammen. Dies stellt eine ebenso einfache wie bauraumsparende Ausgestaltung des Zweistoff-Brennstoffinjektors dar.

Erfindungsgemäß ist bei einer ersten Ausgestaltung vorgesehen, dass eine Mehrzahl von zweiten Injektionseinrichtungen radial auswärts der ersten Injektionseinrichtung um die erste Injektionseinrichtung herum angeordnet ist. Mehrere außenliegende zweite Injektionseinrichtungen und insbesondere diesen zugeordnete, außenliegende Strömungskanäle haben insbesondere den Vorteil, dass eine auf das Fluidvolumen des zweiten Brennstoffs bezogen größere relative Oberfläche bereitgestellt wird. Somit werden eine bessere Wärmeübertragung und eine verbesserte Kühlung des Zweistoff-Brennstoffinjektors verwirklicht. Dies gilt ganz besonders in Zusammenhang mit einem flüssigen, zweiten Brennstoff. Insbesondere ist es möglich, dass die zweiten Injektionseinrichtungen - in Umfangsrichtung gesehen - auf einer gedachten, gemeinsamen Kreislinie um die erste Injektionseinrichtung herum, vorzugsweise in gleichen Winkelabständen voneinander, angeordnet sind. Dies stellt eine ebenso bauraumsparende wie auch für die Erzielung eines symmetrischen Spritzbilds geeignete Anordnung von zweiten Injektionseinrichtungen dar. Besonders bevorzugt sind drei oder vier Injektionseinrichtungen um die erste Injektionseinrichtung herum angeordnet, insbesondere auf einer selben, gedachten Kreislinie, das heißt in einem gleichen radialen Abstand von der ersten Injektionseinrichtung, und vorzugsweise in gleichen Winkelabständen zueinander, insbesondere also jeweils paarweise in einem Winkelabstand von 120° oder von 90° zueinander.

Es ist möglich, dass nur eine und genau eine zweite, radial auswärts der ersten Injektionseinrichtung angeordnete Injektionseinrichtung vorgesehen ist, welche dann bevorzugt die zentral angeordnete, erste Injektionseinrichtung ringförmig und insbesondere koaxial umgreift. In diesem Fall weist die zweite Injektionseinrichtung insbesondere ein ringförmiges Sackloch auf, das ebenfalls ein Volumen aufweist, das größer ist als ein Volumen des der ersten Injektionseinrichtung zugeordneten, vorzugsweise zentralen Sacklochs.

Alternativ oder zusätzlich zu der ersten Ausgestaltung ist bei einer zweiten Ausgestaltung erfindungsgemäß vorgesehen, dass jede Injektionseinrichtung eine axial hubsteuerbare Düsennadel, einen Dichtsitz und ein Sackloch stromabwärts des Dichtsitzes aufweist, wobei das Sackloch mit wenigstens einer Injektionsbohrung fluidverbunden ist. Die Düsennadel liegt in einer Geschlossenstellung dichtend an dem Dichtsitz an und kann mittels einer axialen Hubbewegung von dem Dichtsitz in eine Offenstellung abgehoben werden. In diesem Fall strömt Brennstoff über den Dichtsitz in das Sackloch und kann von dort über die wenigstens eine Injektionsbohrung in einen Brennraum einer Brennkraftmaschine übertreten. Ist die Düsennadel in ihrer Geschlossenstellung angeordnet, kann kein Brennstoff mehr in das Sackloch nachströmen. Insbesondere bei einem gasförmigen Brennstoff verbleibt jedoch ein Restvolumen in dem Sackloch, welches dort insbesondere in einem Kompressionstakt der Brennkraftmaschine komprimiert wird und sich in einem Expansionstakt ausdehnt und dabei aus der wenigstens einen Injektionsbohrung in den Brennraum übertritt. Zu diesem Zeitpunkt herrschen in dem Brennraum meist schon Bedingungen, bei welchen der übertretende, gasförmige Brennstoff nicht mehr entflammt wird. Daher wird dieser in einem Ausstoßtakt gemeinsam mit dem Abgas ausgestoßen, was zu einem Schlupf unverbrannter Kohlenwasserstoffe, insbesondere zu einem Methanschlupf führt.

Im Rahmen der Erfindung ist erkannt worden, dass das vorzugsweise zentral angeordnete Sackloch der ersten Injektionseinrichtung ein kleineres Volumen aufweist, als ein Volumen eines Sacklochs der zweiten Injektionseinrichtung oder eine Summe der Volumina der dezentral angeordneten Sacklöcher der zweiten Injektionseinrichtungen, wodurch das Problem eines Schlupfs unverbrannter Kohlenwasserstoffe vermindert wird, wenn der gasförmige, erste Brennstoff mittels der ersten Injektionseinrichtung anstelle der wenigstens einen zweiten Injektionseinrichtung eingedüst wird.

Gemäß einer Weiterbildung der Erfindung weist der Zweistoff-Brennstoffinjektor eine Mehrzahl von zweiten Injektionseinrichtungen auf, wobei wenigstens eine zweite Injektionseinrichtung der zweiten Injektionseinrichtungen des Zweistoff-Brennstoffinjektors separat ansteuerbar ist. Dabei bedeutet eine separate Ansteuerbarkeit der wenigstens einen zweiten Injektionseinrichtung insbesondere, dass diese unabhängig von jeder anderen zweiten Injektionseinrichtung ansteuerbar ist. Besonders bevorzugt sind alle zweiten Injektionseinrichtungen der zweiten Injektionseinrichtungen des Zweistoff-Brennstoffinjektors separat voneinander ansteuerbar. Dabei ergeben sich Vorteile, die im Folgenden in Zusammenhang mit dem Verfahren näher erläutert werden.

Die Aufgabe wird auch gelöst, indem eine Brennkraftmaschine geschaffen wird, welche einen Zweistoff-Brennstoffinjektor nach einem der zuvor beschriebenen Ausführungsbeispiele aufweist. Die Brennkraftmaschine weist außerdem eine Brenngasversorgungseinrichtung auf, die eingerichtet zur Versorgung der Brennkraftmaschine mit einem ersten, gasförmigen Brennstoff. Die Brennkraftmaschine weist eine Flüssigbrennstoffversorgungseinrichtung auf, die eingerichtet ist zur Versorgung der Brennkraftmaschine mit einem zweiten, flüssigen Brennstoff. Die Brenngasversorgung ist mit dem ersten Anschluss des Zweistoff-Brennstoffinjektors fluidverbunden. Die Flüssigbrennstoffversorgungseinrichtung ist mit dem zweiten Anschluss des Zweistoff-Brennstoffinjektors fluidverbunden. Auf diese Weise ist gewährleistet, dass dem ersten Anschluss, welcher mit der ersten Injektionseinrichtung fluidverbunden ist, ein erster, gasförmiger Brennstoff zugeführt wird, wobei dem zweiten Anschluss, der mit der zweiten Injektionseinrichtung fluidverbunden ist, ein zweiter, flüssiger Brennstoff zugeführt wird. Es verwirklichen sich in Zusammenhang mit der Brennkraftmaschine insbesondere die Vorteile, die bereits in Zusammenhang mit dem Zweistoff-Brennstoffinjektor erläutert wurden.

Die Brennkraftmaschine ist vorzugsweise als Hubkolbenmotor ausgebildet. Es ist möglich, dass die Brennkraftmaschine zum Antrieb eines Personenkraftwagens, eines Lastkraftwagens oder eines Nutzfahrzeugs eingerichtet ist. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Aufgabe wird auch gelöst, indem ein Verfahren zum Betreiben einer Brennkraftmaschine geschaffen wird, wobei eine Brennkraftmaschine nach einem der zuvor beschriebenen Ausführungsbeispiele betrieben wird. Insbesondere weist die Brennkraftmaschine demnach einen Zweistoff-Brennstoffinjektor nach einem der zuvor beschriebenen Ausführungsbeispiele auf. Dabei verwirklichen sich in Zusammenhang mit dem Verfahren insbesondere die Vorteile, die bereits in Zusammenhang mit dem Zweistoff-Brennstoffinjektor und der Brennkraftmaschine beschrieben wurden.

Erfindungsgemäß ist vorgesehen, dass wenigstens eine zweite Injektionseinrichtung einer Mehrzahl von zweiten Injektionseinrichtungen des Zweistoff-Brennstoffinjektors separat angesteuert wird. Durch die separate Ansteuerung wenigstens einer zweiten Injektionseinrichtung, ausgewählt aus einer Gruppe von mehreren zweiten Injektionseinrichtungen, können Vorteile im Vergleich zu bekannten Zweistoff-Brennstoffinjektoren, bei denen alle zweiten Injektionseinrichtungen gemeinsam betätigt werden, erzielt werden. Insbesondere kann ein Eindüs- oder Einspritzbild für den zweiten Brennstoff bedarfsgerecht in Hinblick auf die geometrische Einbringung des zweiten Brennstoffs variiert werden. Zusätzlich ergeben sich Vorteile in Hinblick auf die thermische Belastung des Brennraums und des Zweistoff-Brennstoffinjektors, den Verschleiß der zweiten Injektionseinrichtungen und ein Thermomanagement im Brennraum, was im Folgenden noch näher erläutert wird.

Gemäß einer Weiterbildung der Erfindung ist vorgesehen, dass die zweiten Injektionseinrichtungen einer Mehrzahl von zweiten Injektionseinrichtungen - insbesondere in aufeinanderfolgenden Arbeitszyklen der Brennkraftmaschine - alternierend angesteuert werden. Auf diese Weise kann der zweite Brennstoff abwechselnd durch verschiedene zweite Injektionseinrichtungen eingebracht werden. Dies bewirkt zum einen eine exaktere Dosierung, insbesondere wenn in bevorzugter Ausgestaltung nur eine der zweiten Injektionseinrichtungen angesteuert wird. Durch das abwechselnde Einbringen von zweitem Brennstoff über verschiedene zweite Injektionseinrichtungen werden der Brennraum, der Zylinderkopf und der Kolben in jedem Arbeitsspiel in verschiedenen Bereichen auf verschiedene Weise thermisch beansprucht. Dies kann Standzeitvorteile mit sich bringen.

In Zusammenhang mit einer Kühlung des Zweistoff-Brennstoffinjektors zeigt sich, dass die außenliegende Einbringung des zweiten, flüssigen Brennstoffs über die wenigstens eine, radial auswärts angeordnete zweite Injektionseinrichtung vorteilhaft ist, da der Zweistoff-Brennstoffinjektor dadurch in seinem radial äußeren Bereich von einem flüssigen Brennstoff durchströmt und somit besonders effizient gekühlt wird.

Eine alternierende Ansteuerung der zweiten Injektionseinrichtungen ist auch besonders günstig in Hinblick auf deren Verschleiß, da die in einem Arbeitszyklus nicht angesteuerten zweiten Injektionseinrichtungen geschont werden.

Schließlich ist gemäß einer Weiterbildung der Erfindung vorgesehen, dass durch separates Ansteuern von wenigstens einer zweiten Injektionseinrichtung der Mehrzahl von zweiten Injektionseinrichtungen eine insbesondere geometrische und/oder zeitliche Verbrennungslage in einem Brennraum der Brennkraftmaschine, welchem der Zweistoff-Brennstoffinjektor zugeordnet ist, eingestellt wird. Durch gezielte, separate Ansteuerung von zweiten Injektionseinrichtungen kann nämlich eine gezielte, geometrische und/oder zeitliche Einbringung von zweitem Brennstoff in den Brennraum und damit eine gezielte Anordnung der Verbrennung in demselben durchgeführt werden. Es sind damit verschiedene Abgastemperaturen einstellbar, sodass ein effizientes Thermomanagement für die Brennkraftmaschine durchführbar ist, indem die Abgastemperatur durch gezielte Wahl der Verbrennungslage in dem Brennraum beeinflusst wird. Über die Beeinflussung der Verbrennungslage in dem Brennraum ist es aber auch möglich, die thermische Belastung des Brennraums zu steuern und nach Möglichkeit zu homogenisieren, was sich positiv auf die Leistung und Lebensdauer des Brennraums und damit insgesamt der Brennkraftmaschine auswirken kann.

Die Beschreibung des Zweistoff-Brennstoffinjektors und der Brennkraftmaschine einerseits sowie des Verfahrens andererseits sind komplementär zueinander zu verstehen. Merkmale des Zweistoff-Brennstoffinjektors und/oder der Brennkraftmaschine, die explizit oder implizit in Zusammenhang mit dem Verfahren erläutert wurden, sind bevorzugt einzeln oder miteinander kombiniert Merkmale eines bevorzugten Ausführungsbeispiels des Zweistoff-Brennstoffinjektors und/oder der Brennkraftmaschine. Verfahrens schritte, die explizit oder implizit in Zusammenhang mit dem Zweistoff-Brennstoffinjektor oder der Brennkraftmaschine erläutert wurden, sind bevorzugt einzeln oder miteinander kombiniert Schritte einer bevorzugten Ausführungsform des Verfahrens. Dieses zeichnet sich bevorzugt durch wenigstens einen Verfahrensschritt aus, der durch wenigstens ein Merkmal eines erfindungsgemäßen oder bevorzugten Ausführungsbeispiels des Zweistoff-Brennstoffinjektors und/oder der Brennkraftmaschine bedingt ist. Die Brennkraftmaschine und/oder der Zweistoff-Brennstoffinjektor zeichnet/zeichnen sich bevorzugt durch wenigstens ein Merkmal aus, welches durch wenigstens einen Schritt einer erfindungsgemäßen oder bevorzugten Ausführungsform des Verfahrens bedingt ist.

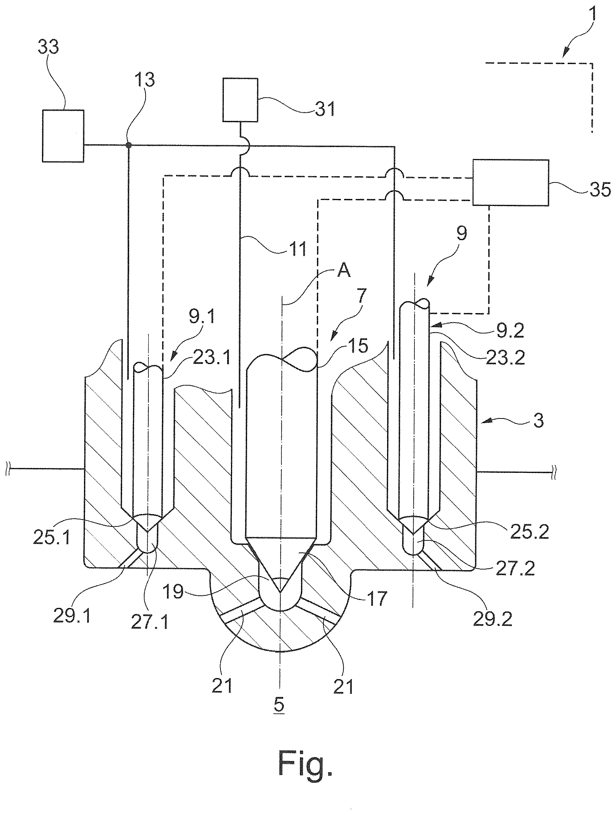

Die Erfindung wird im Folgenden anhand der Zeichnung näher erläutert. Dabei zeigt die einzige Figur eine schematische Darstellung eines Ausführungsbeispiels einer Brennkraftmaschine mit einem Ausführungsbeispiel eines Zweistoff-Brennstoffinjektors.

Die einzige **Fig.** zeigt eine schematische Darstellung eines Ausführungsbeispiels einer Brennkraftmaschine 1 mit einem Ausführungsbeispiel eines Zweistoff-Brennstoffinjektors 3. Der Zweistoff-Brennstoffinjektor 3 ist einem Brennraum 5 zugeordnet und eingerichtet, um dem Brennraum 5 zwei verschiedene Brennstoffe, insbesondere einen ersten, gasförmigen Brennstoff und einen zweiten, flüssigen Brennstoff, zuzuführen.

Hierzu weist der Zweistoff-Brennstoffinjektor 3 eine erste Injektionseinrichtung 7 auf, die eingerichtet ist zur Injektion des ersten Brennstoffs, sowie wenigstens eine zweite, hier insgesamt vier zweite, radial auswärts der ersten Injektionseinrichtung 7 angeordnete Injektionseinrichtungen 9 zur Injektion des zweiten Brennstoffs in den Brennraum 5, wobei in der Schnittdarstellung der Figur von den vier zweiten Injektionseinrichtungen 9 zwei zweite Injektionseinrichtungen, nämlich eine erste zweite Injektionseinrichtung 9.1 und eine zweite zweite Injektionseinrichtung 9.2 dargestellt sind.

Bei dem dargestellten Ausführungsbeispiel ist die erste Injektionseinrichtung 7 zentral, das heißt insbesondere mittig und ganz besonders auf einer Längsachse A des Zweistoff-Brennstoffinjektors 3, die eine Axialrichtung definiert, angeordnet. Die zweiten Injektionseinrichtungen 9 sind in radialer Richtung von der ersten Injektionseinrichtung 7 beabstandet, und radial auswärts, also bei größerem Radius, um die erste Injektionseinrichtung 7 herum angeordnet, insbesondere auf einer gemeinsamen, konzentrisch zu der Längsachse A angeordneten Umfangslinie, wobei die zweiten Injektionseinrichtungen 9 bevorzugt in gleichem Winkelabstand zueinander angeordnet sind. Dabei weisen hier die erste zweite Injektionseinrichtung 9.1 und die zweite zweite Injektionseinrichtung 9.2 einen Winkelabstand von 180° auf der Umfangslinie zueinander auf. Die beiden nicht dargestellten, zweiten Injektionseinrichtungen sind bevorzugt jeweils - in Blickrichtung des Betrachters gesehen - vor der Bildebene und hinter der Bildebene der Figur angeordnet und weisen zueinander ebenfalls einen Winkelabstand von 180° auf der Umfangslinie auf, wobei zwischen paarweise benachbarten zweiten Injektionseinrichtungen 9 jeweils ein Winkelabstand auf der Umfangslinie von 90° gegeben ist. Die vier zweiten Injektionseinrichtungen 9 sind also in gleichen, jeweils 90° betragenden Winkelabständen voneinander auf der gedachten Umfangslinie um die Längsachse A und damit zugleich um die erste Injektionseinrichtung 7 herum angeordnet.

Der Zweistoff-Brennstoffinjektor 3 weist einen ersten Anschluss 11 zur Zufuhr des gasförmigen, ersten Brennstoffs sowie einen zweiten Anschluss 13 zur Zufuhr des flüssigen, zweiten Brennstoffs auf. Dabei ist der erste Anschluss 11 mit der ersten Injektionseinrichtung 7 fluidverbunden, wobei der zweite Anschluss 13 mit den zweiten Injektionseinrichtungen 9 fluidverbunden ist. Es ist alternativ auch möglich, dass jeder zweiten Injektionseinrichtung 9 ein separater zweiter Anschluss 13 zugeordnet ist.

Die erste Injektionseinrichtung 7 weist eine erste, axial hubsteuerbare Düsennadel 15, einen ersten Dichtsitz 17 für die Düsennadel 15, ein erstes Sackloch 19 stromabwärts des Dichtsitzes 17, und erste Injektionsbohrungen 21 auf, mit welchen das erste Sackloch 19 fluidverbunden ist, sodass Brennstoff aus dem ersten Sackloch 19 über die ersten Injektionsbohrungen 21 in den Brennraum 5 strömen kann. Die Funktionsweise einer solchen Injektionseinrichtung ist für sich genommen bekannt, sodass hierauf nicht näher eingegangen wird. Es sei lediglich ausgeführt, dass die erste Düsennadel 15 ansteuerbar ist, um in axialer Richtung eine Hubbewegung von dem ihr zugeordneten ersten Dichtsitz 17 in eine Offenstellung auszuführen, und in einer Geschlossenstellung gegen den ersten Dichtsitz 17 gedrängt zu werden.

In analoger Weise sind den zweiten Injektionseinrichtungen 9 zweite Düsennadeln 23.1, 23.2, zweite Dichtsitze 25.1, 25.2, zweite Sacklöcher 27.1, 27.2 und zweite Injektionsbohrungen 29.1, 29.2 zugeordnet.

Die Brennkraftmaschine 1 weist eine Brenngasversorgung 31 auf, die eingerichtet ist zur Versorgung der Brennkraftmaschine 1 und insbesondere des Brennraums 5 mit dem ersten, gasförmigen Brennstoff, wobei die Brenngasversorgung 31 mit dem ersten Anschluss 11 und damit zugleich auch mit der ersten Injektionseinrichtung 7 fluidverbunden ist.

Die Brennkraftmaschine 1 weist außerdem eine Flüssigbrennstoffversorgungseinrichtung 33 auf, die eingerichtet ist zur Versorgung der Brennkraftmaschine 1 und insbesondere des Brennraums 5 mit dem zweiten, flüssigen Brennstoff, wobei die Flüssigbrennstoffversorgungseinrichtung 33 mit dem zweiten Anschluss 13 und insbesondere mit den zweiten Injektionseinrichtungen 9.1, 9.2 fluidverbunden ist.

Die verschiedenen Injektionseinrichtungen 7, 9 sind hier separat, das heißt insbesondere unabhängig voneinander, ansteuerbar. Insbesondere sind die zweiten Injektionseinrichtungen 9.1, 9.2 separat, das heißt unabhängig voneinander, ansteuerbar.

Hierzu weist die Brennkraftmaschine 1 eine Steuereinrichtung 35 auf, die mit den Injektionseinrichtungen 7, 9 zu deren separater, unabhängiger Ansteuerung wirkverbunden ist.

Dabei ist bevorzugt vorgesehen, dass die zweiten Injektionseinrichtungen 9.1, 9.2 - insbesondere in aufeinanderfolgenden Arbeitszyklen des Brennraums 5 - alternierend angesteuert werden. Zusätzlich oder alternativ ist bevorzugt vorgesehen, dass durch separates Ansteuern von wenigstens einer der zweiten Injektionseinrichtungen 9.1, 9.2 eine Verbrennungslage in dem Brennraum 5 eingestellt wird.

Dadurch, dass bei dem hier vorgeschlagenen Zweistoff-Brennstoffinjektor 3 der gasförmige Brennstoff über das eine zentrale, erste Sackloch 19 in den Brennraum 5 eingebracht wird, wobei das erste Sackloch 19 ein kleineres Volumen aufweist, als es der Summe der Volumina der zweiten Sacklöcher 27.1, 27.2 entspricht, wird das Problem eines Schlupfs unverbrannter Kohlenwasserstoffe und insbesondere eines Methanschlupfs bei der Verwendung eines methanhaltigen Brenngases in einem Expansionstakt durch Expansion des Brenngases deutlich vermindert beziehungsweise reduziert.

Dadurch, dass die zweiten Injektionseinrichtungen 9.1, 9.2 separat und besonders bevorzugt alternierend angesteuert werden, kann zum einen eine wechselnde thermische Beanspruchung verschiedener Bereiche des Brennraums, und zum anderen eine exaktere Dosierung des zweiten, flüssigen Brennstoffs erreicht werden.

Es zeigt sich dabei auch, dass die Einspritzung des zweiten, flüssigen Brennstoffs radial außen an dem Zweistoff-Brennstoffmjektor 3 grundsätzlich zu einer verbesserten Kühlung desselben führt, da die Zuführung des zweiten, flüssigen Brennstoffs, der eine höhere Wärmekapazität aufweist als der gasförmige, erste Brennstoff, oberflächennah in dem Zweistoff-Brennstoffinjektor 3 erfolgt.

Durch separates Ansteuern der zweiten Injektionseinrichtung 9.1, 9.2 und eine damit einhergehende Beeinflussung der geometrischen und/oder zeitlichen Verbrennungslage in dem Brennraum 5 kann ein Thermomanagement für die Brennkraftmaschine 1 durchgeführt werden, wobei insbesondere verschiedene Abgastemperaturen einstellbar sind.

Eine aufwändige Abgasnachbehandlung, die ansonsten aufgrund eines hohen Schlupfs unverbrannter Kohlenwasserstoffe nötig wäre, beispielsweise ein Methanoxidationskatalysator, kann entfallen. Ansonsten unverbrannte Brenngasmengen können der Verbrennung zugeführt werden.

## Patentansprüche

1. Zweistoff-Brennstoffinjektor (3) für eine Brennkraftmaschine (1), mit
- einer ersten Injektionseinrichtung (7) zur Injektion eines ersten Brennstoffs, und
- wenigstens einer zweiten Injektionseinrichtung (9.1,9.2) zur Injektion eines zweiten Brennstoffs, wobei der zweite Brennstoff von dem ersten Brennstoff verschieden ist, wobei die wenigstens eine zweite Injektionseinrichtung (9.1,9.2) - mit Blick auf eine Längsachse (A) des Zweistoff-Brennstoffinjektors (3) - in einem größeren radialen Abstand zu der Längsachse (A) angeordnet ist als die erste Injektionseinrichtung (7), und mit
- einem ersten Anschluss zur Zuführung des ersten Brennstoffs und einem zweiten Anschluss zur Zuführung des zweiten Brennstoffs, wobei
- der erste Anschluss (11) mit der ersten Injektionseinrichtung (7) zur Zufuhr des gasförmigen ersten Brennstoffs, und der zweite Anschluss (13) mit der zweiten Injektionseinrichtung (9.1,9.2) zur Zufuhr des flüssigen, zweiten Brennstoffs fluidverbunden ist,
**dadurch gekennzeichnet, dass**
- eine Mehrzahl von zweiten Injektionseinrichtungen (9.1,9.2) um die erste Injektionseinrichtung (7) herum angeordnet ist, und/oder dass
- jede Injektionseinrichtung (7,9.1,9.2) eine axial hubsteuerbare Düsennadel (15,23.1,23.2), einen Dichtsitz (17,25.1,25.2), und ein Sackloch (19,27.1,27.2) stromabwärts des Dichtsitzes (17,25.1,25.2) aufweist, wobei das Sackloch (19,27.1,27.2) mit wenigstens einer Injektionsbohrung (21,29.1,29.2) fluidverbunden ist.

2. Zweistoff-Brennstoffinjektor (3) nach Anspruch 1, **dadurch gekennzeichnet, dass** die erste Injektionseinrichtung (7) zentral an dem Zweistoff-Brennstoffinjektor (3) angeordnet ist.

3. Zweistoff-Brennstoffinjektor (3) nach einem der vorhergehenden Ansprüche, **dadurch gekennzeichnet, dass** eine Mehrzahl von zweiten Injektionseinrichtungen (9.1,9.2) vorgesehen ist, wobei wenigstens eine zweite Injektionseinrichtung (9.1,9.2) der zweiten Injektionseinrichtungen (9.1,9.2) separat ansteuerbar ist.

4. Brennkraftmaschine (1), mit einem Zweistoff-Brennstoffinjektor (3) nach einem der Ansprüche 1 bis 3, und mit einer Brenngasversorgungseinrichtung (31), eingerichtet zur Versorgung der Brennkraftmaschine (1) mit einem ersten, gasförmigen Brennstoff, und mit einer Flüssigbrennstoffversorgungseinrichtung (33), eingerichtet zur Versorgung der Brennkraftmaschine (1) mit einem zweiten, flüssigen Brennstoff, wobei die Brenngasversorgungseinrichtung (31) mit dem ersten Anschluss (11) fluidverbunden ist, und wobei die Flüssigbrennstoffversorgungseinrichtung (33) mit dem zweiten Anschluss (13) des Zweistoff-Brennstoffinjektors (3) fluidverbunden ist.

5. Verfahren zum Betreiben einer Brennkraftmaschine (1), wobei eine Brennkraftmaschine (1) nach Anspruch 4 betrieben wird, **dadurch gekennzeichnet, dass** wenigstens eine zweite Injektionseinrichtung (9.1,9.2) einer Mehrzahl von zweiten Injektionseinrichtungen (9.1,9.2) separat angesteuert wird.

6. Verfahren nach Anspruch 5, **dadurch gekennzeichnet, dass** die zweiten Injektionseinrichtungen (9.1,9.2) alternierend angesteuert werden.

7. Verfahren nach einem der Ansprüche 5 und 6, **dadurch gekennzeichnet, dass** durch separates Ansteuern von wenigstens einer zweiten Injektionseinrichtung (9.1,9.2) der zweiten Injektionseinrichtungen (9.1,9.2) eine Verbrennungslage in einem Brennraum (5) der Brennkraftmaschine (1), dem der Zweistoff-Brennstoffinjektor (3) zugeordnet ist, eingestellt wird.

## Claims

1. Dual-fuel fuel injector (3) for an internal combustion engine (1), comprising
- a first injection device (7) for injecting a first fuel, and
- at least one second injection device (9.1, 9.2) for injecting a second fuel, wherein the second fuel being different from the first fuel, wherein the at least one second injection device (9.1, 9.2) - with respect to a longitudinal axis (A) of the dual-fuel fuel injector (3) - being arranged at a greater radial distance from the longitudinal axis (A) than the first injection device (7), and having
- a first port for supplying the first fuel and a second port for supplying the second fuel, wherein
- the first port (11) is fluid-connected to the first injection device (7) for supplying the gaseous first fuel, and the second port (13) is fluid-connected to the second injection device (9.1, 9.2) for supplying the liquid second fuel,
**characterized in that**
- a plurality of second injection devices (9.1, 9.2) is arranged around the first injection device (7), and/or **in that**
- each injection device (7, 9.1, 9.2) has an axially stroke-controllable nozzle needle (15, 23.1, 23.2), a sealing seat (17, 25.1, 25.2), and a blind hole (19, 27.1, 27.2) downstream of the sealing seat (17, 25.1, 25.2), wherein the blind hole (19, 27.1, 27.2) being fluid-connected to at least one injection bore (21, 29.1, 29.2).

2. Dual-fuel fuel injector (3) according to claim 1, **characterized in that** the first injection device (7) is arranged centrally on the dual-fuel fuel injector (3).

3. Dual-fuel fuel injector (3) according to one of the preceding claims, **characterized in that** a plurality of second injection devices (9.1, 9.2) is provided, wherein at least one second injection device (9.1, 9.2) of the second injection devices (9.1, 9.2) being separately controllable.

4. Internal combustion engine (1), having a dual-fuel fuel injector (3) according to one of Claims 1 to 3, and having a fuel gas supply device (31), configured to supply the internal combustion engine (1) with a first, gaseous fuel, and having a liquid fuel supply device (33), configured for supplying the internal combustion engine (1) with a second, liquid fuel, wherein the fuel gas supply device (31) being fluid-connected to the first port (11), and the liquid fuel supply device (33) being fluid-connected to the second port (13) of the dual-fuel fuel injector (3).

5. Method for operating an internal combustion engine (1), wherein an internal combustion engine (1) according to claim 4 is operated, **characterized in that** at least one second injection device (9.1,9.2) of a plurality of second injection devices (9.1,9.2) is controlled separately.

6. Method according to claim 5, **characterized in that** the second injection devices (9.1, 9.2) are controlled alternately.

7. Method according to one of Claims 5 and 6, **characterized in that** a combustion position in a combustion chamber (5) of the internal combustion engine (1), to which the dual-fuel fuel injector (3) is assigned, is set by separately actuating at least one second injection device (9.1, 9.2) of the second injection devices (9.1, 9.2).

## Revendications

1. Injecteur de carburant bicarburant (3) pour un moteur à combustion interne (1), comprenant
- un premier dispositif d'injection (7) pour injecter un premier carburant, et
- au moins un deuxième dispositif d'injection (9.1, 9.2) pour l'injection d'un deuxième carburant, le deuxième carburant étant différent du premier carburant, le au moins un deuxième dispositif d'injection (9.1, 9.2) - par rapport à un axe longitudinal (A) de l'injecteur de carburant bicarburant (3) - étant disposé à une plus grande distance radiale de l'axe longitudinal (A) que le premier dispositif d'injection (7), et ayant
- une première connexion pour l'alimentation du premier carburant et une seconde connexion pour l'alimentation du second carburant, dans lequel
- la première connexion (11) étant en communication fluidique avec le premier dispositif d'injection (7) pour fournir le premier carburant gazeux, et la deuxième connexion (13) étant en communication fluidique avec le deuxième dispositif d'injection (9.1, 9.2) pour fournir le deuxième carburant liquide,
**caractérisé en ce que**
- une pluralité de seconds dispositifs d'injection (9.1, 9.2) est disposée autour du premier dispositif d'injection (7), et/ou **en ce que**
- chaque dispositif d'injection (7, 9.1, 9.2) présente une aiguille de buse (15, 23.1, 23.2) dont la course peut être contrôlée axialement, un siège d'étanchéité (17, 25.1, 25.2) et un trou borgne (19, 27.1, 27.2) en aval du siège d'étanchéité (17, 25.1, 25.2), le trou borgne (19, 27.1, 27.2) étant en communication fluidique avec au moins un alésage d'injection (21, 29.1, 29.2).

2. Injecteur de carburant bicarburant (3) selon la revendication 1, **caractérisé en ce que** le premier dispositif d'injection (7) est disposé de manière centrale sur l'injecteur de carburant bicarburant (3).

3. Injecteur de carburant bicarburant (3) selon l'une des revendications précédentes, **caractérisé en ce qu'**une pluralité de seconds dispositifs d'injection (9.1, 9.2) est prévue, au moins un second dispositif d'injection (9.1, 9.2) des seconds dispositifs d'injection (9.1, 9.2) pouvant être commandé séparément.

4. Moteur à combustion interne (1), comportant un injecteur de carburant bicarburant (3) selon l'une des revendications 1 à 3, et comportant un dispositif d'alimentation en gaz combustible (31), conçu pour alimenter le moteur à combustion interne (1) avec un premier carburant gazeux, et comportant un dispositif d'alimentation en carburant liquide (33), disposé pour alimenter le moteur à combustion interne (1) avec un second carburant liquide, le dispositif d'alimentation en gaz combustible (31) étant en communication fluidique avec la première connexion (11), et le dispositif d'alimentation en carburant liquide (33) étant en communication fluidique avec la seconde connexion (13) de l'injecteur de carburant bicarburant (3).

5. Procédé pour faire fonctionner un moteur à combustion interne (1), dans lequel un moteur à combustion interne (1) est exploité selon la revendication 4, **caractérisé en ce qu'**au moins un deuxième dispositif d'injection (9.1, 9.2) d'une pluralité de deuxièmes dispositifs d'injection (9.1, 9.2) est commandé séparément.

6. Procédé selon la revendication 5, **caractérisé en ce que** les seconds dispositifs d'injection (9.1, 9.2) sont commandés alternativement.

7. Procédé selon l'une des revendications 5 et 6, **caractérisé en ce qu'**une position de combustion dans une chambre de combustion (5) du moteur à combustion interne (1), à laquelle est associé l'injecteur de carburant bicarburant (3), est réglée en actionnant séparément au moins un deuxième dispositif d'injection (9.1, 9.2) des deuxièmes dispositifs d'injection (9.1, 9.2).
